(19) Europäisches Patentamt
European Patent Office
Office européen des brevets

(11) **EP 4 606 526 A1**

(12) **EUROPEAN PATENT APPLICATION**

(43) Date of publication:
**27.08.2025 Bulletin 2025/35**

(21) Application number: **25159383.6**

(22) Date of filing: **21.02.2025**

(51) International Patent Classification (IPC):
**B25F 5/00** (2006.01) **H01M 10/6235** (2014.01)
**H01M 10/48** (2006.01)

(52) Cooperative Patent Classification (CPC):
**H01M 10/6235; B25F 5/00; H01M 10/425;
H01M 10/48; H01M 10/486; H01M 50/247;**
H01M 2010/4271; H01M 2220/30

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **23.02.2024 US 202463557026 P**

(71) Applicant: **Milwaukee Electric Tool Corporation
Brookfield, WI 53005 (US)**

(72) Inventors:
• **ZHAO, Dapeng
Wisconsin, 53126 (US)**
• **OLSON, Daniel
Wisconsin, 53045 (US)**

(74) Representative: **Barker Brettell LLP
100 Hagley Road
Edgbaston
Birmingham B16 8QQ (GB)**

(54) **POWER TOOL CONTROL BASED ON BATTERY PACK THERMAL CHARACTERISTICS**

(57)    A power tool system (100) includes a power tool (100), a sensor (455), and an electronic controller (410) of the power tool. The power tool includes a power tool housing (106), a motor housed within the power tool housing, and a pack interface (116) coupled to the power tool housing. The pack interface receives a power tool battery pack having a corresponding tool interface. The sensor senses an electrical parameter corresponding to a power tool battery pack coupled to the pack interface. The electronic controller of the power tool controls the power tool battery pack to discharge current; receives an output of the sensor when the power tool battery pack is controlled to discharge current; generates a temperature estimate by processing the output of the sensor using a thermal model stored on the memory; and generates a temperature warning signal in response to the temperature estimate exceeding a temperature threshold.

FIG. 1

**EP 4 606 526 A1**

**Description**

RELATED APPLICATIONS

This application claims priority to U.S. Provisional Application No. 63/557,026, filed on February 23, 2024, titled "POWER TOOL CONTROL BASED ON BATTERY PACK THERMAL CHARACTERISTICS," which is hereby incorporated by reference in its entirety.

BACKGROUND

Power tools can be used for a variety of purposes such as cutting, drilling, driving, sanding, shaping, grinding, polishing, painting, heating, lighting, cleaning, gardening, and construction, among other uses. Battery-powered power tools may selectively couple to a power tool battery pack to provide power for operating such power tools.

SUMMARY OF THE DISCLOSURE

Some aspects of the present disclosure provide a power tool system includes a power tool, a sensor, and an electronic controller of the power tool. The power tool includes a power tool housing, a motor housed within the power tool housing, and a pack interface coupled to the power tool housing. The pack interface receives a power tool battery pack having a corresponding tool interface. The sensor senses an electrical parameter corresponding to a power tool battery pack coupled to the pack interface. The electronic controller of the power tool controls the power tool battery pack to discharge current; receives an output of the sensor when the power tool battery pack is controlled to discharge current; generates a temperature estimate by processing the output of the sensor using a thermal model stored on the memory; and generates a temperature warning signal in response to the temperature estimate exceeding a temperature threshold.

In some examples, the electronic controller is further configured to limit power to the motor in response to the temperature warning signal.

In some examples, the to limit power to the motor, the electronic controller is configured to: reduce a maximum current limit of the power tool to a reduced value; and control the power tool using the maximum current limit set at the reduced value.

In some examples, the electronic controller is further configured to: generate, in response to the temperature warning signal, a user notification indicative of a power tool battery pack temperature being near to an overtemperature limit.

In some examples, the user notification indicates at least one selected from a group of an estimated number of operations until reaching the overtemperature limit, an estimated time until reaching the overtemperature limit, or an estimated temperature of the power tool battery pack.

In some examples, the temperature estimate is a first temperature estimate and wherein the electronic controller is further configured to: generate a second temperature estimate by processing the output of the sensor using the thermal model stored on the memory, wherein the first temperature estimate indicates a temperature of a first component of the power tool battery pack and the second temperature estimate indicates a temperature of a second component of the power tool battery pack.

In some examples, the power tool battery pack includes a terminal of the tool interface, a pack housing, and a cylindrical cell including a jelly roll and a can housing, and wherein the first component is selected from a group of the jelly roll, the can housing, the terminal, and the pack, and the second component is another component selected from the group of the jelly roll, the can housing, the terminal, and the pack housing.

In some examples, the thermal model includes parameters set based on ground truth temperature measurements directly measured from components of a testing battery pack that is of a same type as the power tool battery pack.

In some examples, the thermal model is a trained machine learning model comprising a neural network.

In some examples, the memory stores a plurality of thermal models and the electronic controller is configured to select the thermal model from the plurality of thermal models based on a type of the power tool battery pack.

In some examples, the electronic controller is configured to: determine the type of the power tool battery pack based on the output of the sensor or a communication from the power tool battery pack that includes a pack identifier; and select the thermal model from the plurality of thermal models as the thermal model associated with the type of power tool battery pack.

In some examples, the electronic controller is configured to determine an initial temperature of the power tool battery pack and input the initial temperature of the power tool battery pack as an additional input to the thermal model.

In some examples, the electronic controller determines the initial temperature based on at least one selected from a group of an output from an ambient temperature sensor or a communication from the power tool battery pack that includes the initial temperature.

In some examples, the electrical parameter comprises at least one selected from a group of a current supplied from the power tool battery pack or a voltage of the power tool battery pack.

In some examples, the output of the sensor comprises a time series of measurements of the electrical parameter.

Additional aspects of the present disclosure provide a method of controlling the operation of a power tool. The method includes controlling, by an electronic controller, a power tool battery pack to discharge current when the power tool battery pack is coupled to a pack interface of a power tool; measuring an electrical output of the power tool battery pack based on an output of a sensor when the power tool battery pack is controlled to discharge current; estimating, by the electronic controller, a temperature of the power tool battery pack from the electrical output using a thermal model; and generating, with the electronic controller, a temperature warning signal in response to the temperature of the power tool battery pack exceeding a temperature threshold.

Some examples include controlling, by the electronic controller in response to the temperature warning signal, operation of the power tool to maintain the temperature of the power tool battery pack below a temperature threshold.

In some examples, controlling the operation of the power tool comprises at least one of: limiting power to a motor of the power tool in response to the temperature warning signal; or reducing a maximum current limit of the power tool to a reduced value and controlling the power tool using the maximum current limit set at the reduced value.

Some examples include generating, by the electronic controller in response to the temperature warning signal, generating a user notification indicative of a battery pack temperature being near to an overtemperature limit.

In some examples, the user notification indicates at least one selected from a group of an estimated number of operations until reaching the overtemperature limit, an estimated time until reaching the overtemperature limit, or an estimated temperature of the power tool battery pack.

Features which are described in the context of separate aspects and/or embodiments of the invention may be used together and/or be interchangeable wherever possible. Similarly, where features are, for brevity, described in the context of a single embodiment, those features may also be provided separately or in any suitable sub- combination. Features described in connection with the power tool system may have corresponding features definable and/or combinable with respect to a method or vice versa, and these embodiments are specifically envisaged.

BRIEF DESCRIPTION OF THE DRAWINGS

FIG. 1 illustrates a power tool system according to some aspects of the present disclosure.

FIG. 2 illustrates examples of power tool devices that can be implemented as part of the power tool system of FIG. 1.

FIG. 3A illustrates different types of power tool battery packs that can be implemented as part of the power tool system of FIG. 1

FIG. 3B is an exploded view of an example power tool battery pack.

FIG. 4 is a block diagram of an example power tool system.

FIG. 5 is a flowchart illustrating the steps of an example method for controlling the operation of a power tool system in accordance with some aspects of the present disclosure.

FIG. 6 illustrates an example thermal model of a power tool system.

DETAILED DESCRIPTION

Power tool devices (e.g., power tools, power tool adapters, power supplies (e.g., inverters), lasers (e.g., rotary lasers, point lasers), work lights), may be powered by portable battery pack. Overheating in battery packs while using power tool devices can pose a safety concern and operational challenge. Energy demands placed on the battery during tool operation can lead to increased internal resistance and heat generation. This heat, if not effectively managed, can result in thermal runaway, causing potential damage to the battery cells.

Newer power tools are drawing more power, resulting in greater risk of creating an overtemperature condition in smaller, weaker, or older battery packs. It is an aspect of the present disclosure to provide a thermal model that is able to accurately infer, or otherwise estimate, the battery pack temperature given the initial temperature and the current draw or other electrical parameter of the battery pack while the power tool is being operated. The electronic controller of the power tool can receive the estimated temperature and in response control the power tool performance to avoid creating an overtemperature condition in the battery pack.

Provided herein are techniques for enabling a power tool device that selectively receives a power tool battery pack to control or otherwise manage is operation using a thermal model operating on an electronic controller of the power tool device and/or on an electronic controller of the battery pack to estimate and monitor the temperature of the battery pack. Additionally or alternatively, the power tool device may estimate temperature of the battery pack based on temperature measurements received from a sensor or other temperature measurement device contained within or otherwise coupled to the battery back.

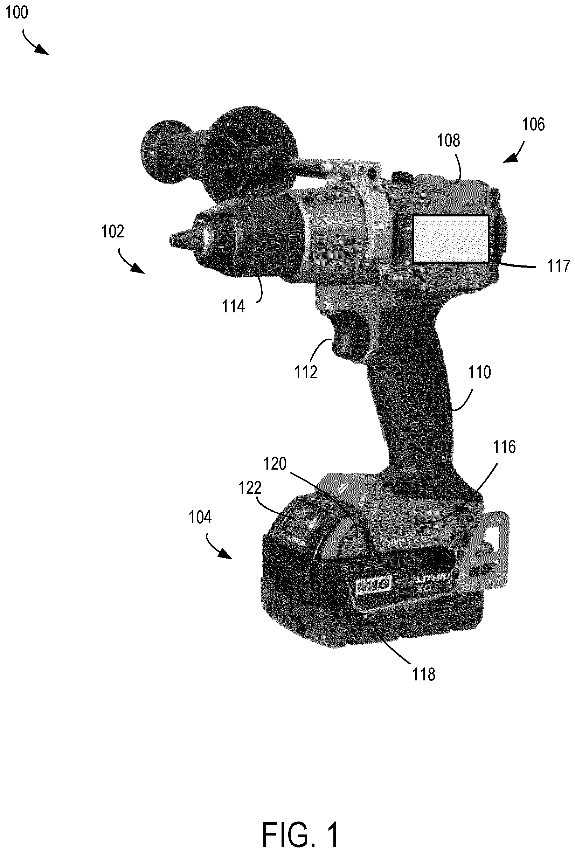

FIG. 1 illustrates a power tool system 100. The power tool system 100 includes a power tool device 102 and a power tool battery pack 104. The power tool battery pack 104 is selectively coupled to the power tool device 102. Accordingly, the power tool battery pack 104 may be removed (e.g., and coupled to another power tool device) and another power tool battery pack may be coupled to the power tool device 102. The power tool device 102 is illustrated in FIG. 1 as a motorized power drill-driver. The power tool device 102 includes a housing 106 with main body 108, a handle 110, an actuator (e.g., trigger) 112, a motor-driven element (e.g., chuck) 114, and a pack interface 116. The main body 108 houses a motor (not shown in FIG. 1). The handle 110 enables a user to grip the power tool device 102. The actuator 112 is manipulatable and configured to be pulled or depressed to control operation of the power tool device 102. The motor-driven element 114 is configured to receive and secure a driving or drilling bit, and to be rotated by operation of the motor in the main body 108 to perform a drilling or driving operation. The pack interface 116 is an electro-mechanical interface for selectively receiving and coupling to a power tool battery pack, such as, e.g., the power tool battery pack 104. The pack interface 116 may include rails (no shown) for mechanically receiving and guiding the power tool battery pack 104 and terminals (not shown) for electrically coupling to the power tool battery pack 104.

The power tool device 102 further includes a user feedback device 117. As illustrated, the user feedback device 117 is a display positioned on the main body 108. The display 117 may include a controllable pixel array configured to display text, graphics, colors, or combinations thereof. However, in other examples, the user feedback device 117 is another type of visual indicator (e.g., one or more light emitting diodes), a speaker, or a combination thereof, and/or is located on another portion fo the power tool device 102 (e.g., on the handle 110, a backside or topside fo the main body 108, at or near the pack interface 116, etc.). As described in further detail below, the display may be controlled to provide a user notification indicative of a battery pack temperature of the power tool battery pack 104. In some examples, the user feedback device 117 is not included on the power tool device 102 or in the power tool system 100.

The power tool battery pack 104 (herein, battery pack 104) includes a housing 118, latching members 120, and a fuel gauge 122. The housing 118 houses one or more battery cells and electronics (not shown in FIG. 1). The latching members 120 enable the secure latching of the battery pack 104 to the power tool device 102 (and, in particular, to the pack interface 116). By depressing the latching members 120, a user may detach the battery pack 104 from the power tool device 102. Although the battery pack 104 and pack interface 116 are illustrated as having a sliding-type engagement, in other examples, the battery pack 104 and pack interface 116 have another form factor, such as a stem-type battery pack that has an elongated stem that is inserted within a cavity of the pack interface 116.

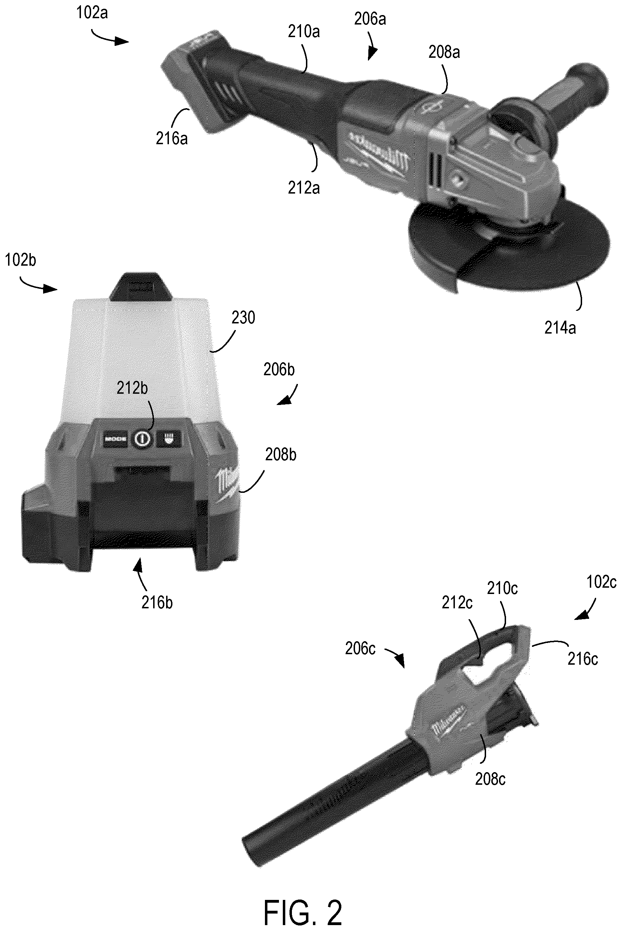

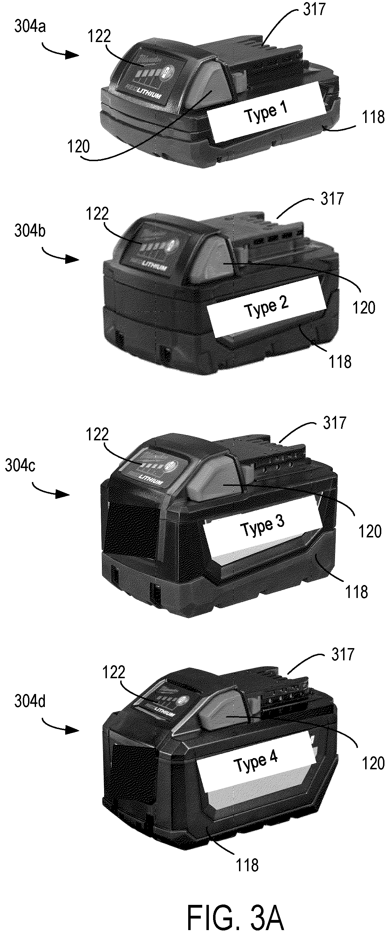

Although the power tool device 102 is illustrated in FIG. 1 as a motorized power drill-driver, in some examples, the power tool device 102 is a motorized power tool of another type or is a non-motorized power tool (e.g., see discussion with respect to FIG. 2). Additionally, although the battery pack 104 is illustrated as a first type of battery pack, in other examples, the battery pack 104 is of another type with a different output capacity (e.g., see discussion with respect to FIG. 3A).

FIG. 2 illustrates other examples of the power tool device 102. For example, FIG. 2 illustrates a grinder 102a, a work light 102b, and a blower 102c, each of which is an example of the power tool device 102. The grinder 102a is another example of a motorized power tool and includes a housing 206a with a main body 208a, a handle 210a, an actuator 212a, a motor-driven element 214a, and a pack interface 216a. The housing 206a, main body 208a, handle 210a, actuator 212a, motor-driven element 214a, and pack interface 216a are additional examples of the housing 106, main body 108, handle 110, actuator 112, motor-driven element 114, and pack interface 116, respectively. Other examples of a motorized power tool include drills, hammer drills, reciprocating saws, circular saws, chainsaws, drivers, impact drivers, drain snakes, power ratchets, miter saws, die grinders, mixers, grinders, sanders, nailers, table saws, worksite fans, dust extractors, the blower 102c, and the like. The motorized power tools may include different motor-driven elements as appropriate for the particular type of tool, such as, for example, an arbor (for saw blades, grinder wheels, etc.), impeller, nail driver, chuck, or a tool implement holder for holding sandpaper, drain snakes, or the like. Additionally, the motors of the various power tool devices 102 may also drive an intervening transmission (e.g., planetary gear set or other gear set) that links the motor to corresponding the motor-driven element.

The work light 102b is an example of a nonmotorized power tool and includes a housing 206b with a main body 208b, an actuator 212b, a pack interface 216b, and a power-driven output element 230. The housing 206b, main body 208b, actuator 212b, and pack interface 216b are additional examples of the housing 106, main body 108, actuator 112, and pack interface 116, respectively. The power-driven output element 230 includes a lighting element for producing light for a work area using power discharged by and received from a power tool battery pack coupled to the pack interface 216 (e.g., the battery pack 104). Other examples of a nonmotorized power tool include worksite radios, other worksite lights, and test and measurement devices (for example, distance measurers, infrared thermometers, borescope cameras, or stud finders).

The blower 102c is another example of a motorized power tool. The blower 102c includes a housing 206c with a main body 208c, a handle 210c, an actuator 212c, a motor-driven element (an impeller, hidden from view inside the main body 208c), and a pack interface 216c. The housing 206c, main body 208c, handle 210c, actuator 212c, motor-driven element, and pack interface 216c are additional examples of the housing 106, main body 108, handle 110, actuator 112, motor-driven element 114, and pack interface 116, respectively.

The discussion of the power tool device 102 herein similarly applies to the power tool devices 102a, 102b, 102c unless otherwise noted.

As illustrated and discussed, each of the power tool devices 102, 102a, 102b, and 102c is configured to selectively receive and be coupled to the battery pack 104, and other battery packs having a similar electro-mechanical interface, via the pack interface 116, 216a-c. For example, with reference to FIG. 3A, additional battery packs 304a, 304b, 304c, and 304d are illustrated, each of which has a similar electro-mechanical interface as the battery pack 104.

FIG. 3A illustrates other examples of the battery pack 104. For example, FIG. 3A illustrates a first power battery pack 304a, a second power tool battery pack 304b, a third power tool battery pack 304c, a fourth power tool battery pack 304d, each of which is an example of the battery pack 104. Each of the battery packs 304a-d may have the same electro-mechanical interface as the battery pack 104 such that each is configured to be received in the pack interfaces 116, 216a-c of the power tool devices 102, 102a-c. However, each of the battery packs 304a-d may have or be associated with a different output capacity and, accordingly, may be a different type of battery pack from one another. For example, the battery pack 304a may be of a first type, the battery pack 304b may be of a second type, the battery pack 304c may be of a third type, and the battery pack 304d may be of a fourth type. As used herein, the output capacity of a pack may refer to a maximum, minimum, and/or nominal output current (amperes), a maximum, minimum, and/or nominal output voltage (volts), a maximum, minimum, and/or nominal output power (watts), output duration limits at certain current levels, an ampere-hour capacity, a watt-capacity, and/or a combination thereof. Additionally or alternatively, the output capacity for a particular battery pack type may be described in terms of a particular combination of a number of cells (e.g., 5, 10, or 15 cells), a particular cell type (e.g., cylindrical roll type 1, cylindrical roll type 2, prismatic, pouch), demand level category (standard or high demand as categorized by a manufacturer), and/or output level (e.g., standard or high output level as categorized by a manufacturer), among other characteristics.

In some examples, each of the battery packs 304a-d is configured to provide a similar nominal output voltage (e.g., 18 volts, 20 volts, a voltage between 16-24 volts, 12 volts, a voltage between 10 volts and 14 volts, 54 volts, 60 volts, 72 volts, 108 volts, 120 volts, a voltage between 50-80 volts, a voltage between 54-74 volts, etc.) or similar nominal output voltages (e.g., in the case where a pack may be configurable to provide different nominal output voltages depending on a mode of operation).

Each battery pack 304a-d has a housing 118 that houses one or more battery cells. The one or more battery cells may be of various chemistries (e.g., lithium-ion (Li-Ion), nickel cadmium (Ni-Cad), etc.), and/or may be of various forms (e.g., cylindrical, pouch, prismatic, etc.). In some examples, the first battery pack 304a has a first quantity of battery cells of a first voltage, the second battery pack 304b has a second quantity of battery cells (greater than the first quantity), and the third and fourth battery pack 304c, 304d have a third quantity of battery cells (greater than the second quantity). In some examples, by increasing the quantity of battery cells, the ampere-hour capacity of the battery pack increases. In some examples, one or more of the battery packs has a higher output capacity than another pack because the battery pack has increased heat dissipating capabilities, thus increasing the maximum rated current of the battery pack or operation time at increased current levels. In some examples, one or more of the battery packs has a higher output capacity than another pack because the form or chemistry of the cell of the battery pack provides an increased maximum rated current of the battery pack or operation time at increased current levels, and/or an increased ampere-hour capacity of the battery pack.

Each battery pack 304a-d includes a power tool device interface 317 configured to selectively engage and mate with the pack interfaces 116, 216a-c. The device interface 317 can include one or more power terminals and, in some cases, one or more communication terminals that interface with respective power terminals, communication terminals, etc., of pack interfaces 116, 216a-c. Although some variations may be present, the device interface 317 may be substantively the same for each of the plurality of battery packs 304a-d (and each of the types of the battery pack 104) such that each may engage with the pack interfaces 116, 216a-c. Accordingly, the plurality of battery packs 104, 304a-d may have a device interface (device interface 317) that corresponds to the pack interfaces 116, 216a-c.

In some examples, each of the battery packs 304a-d may be a battery pack manufactured by Milwaukee Tool for the M18™ cordless tool system. In other examples, the battery pack 104 of FIG. 1 (and other packs interchangeable with the power tool device 102) may be battery packs manufactured by Milwaukee Tool for the M12™ cordless tool system. In other examples, the battery pack 104 of FIG. 1 (and other packs interchangeable with the power tool device 102) may be battery packs manufactured by Milwaukee Tool for the MX FUEL™ cordless equipment system. In still further examples, the systems and technologies described herein may be used with other power tool platforms (e.g., manufactured by other power tool manufacturers) and, accordingly, the battery pack 104 of FIG. 1 (and other packs interchangeable with the power tool device 102) may be battery packs manufactured by other manufacturers.

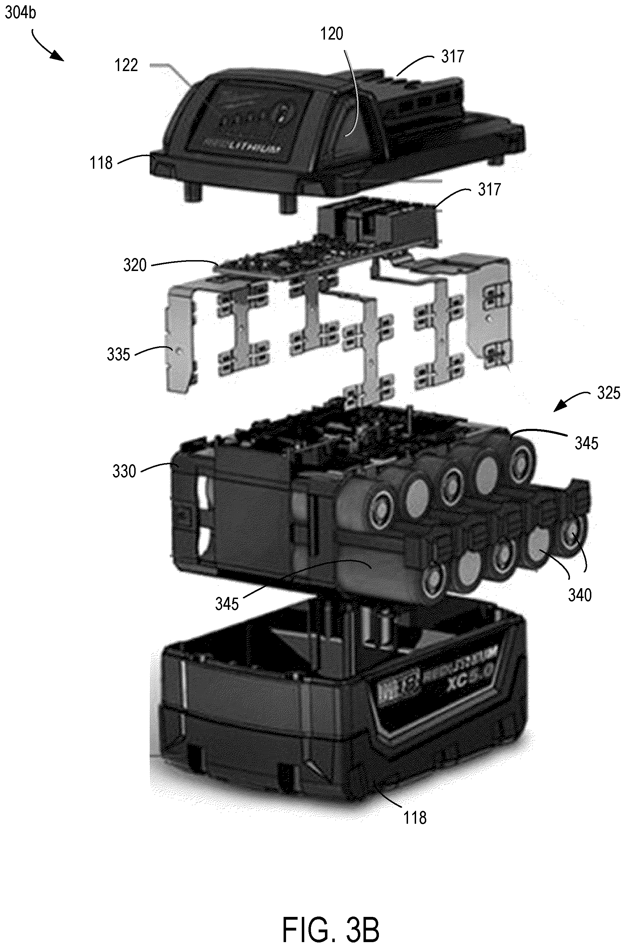

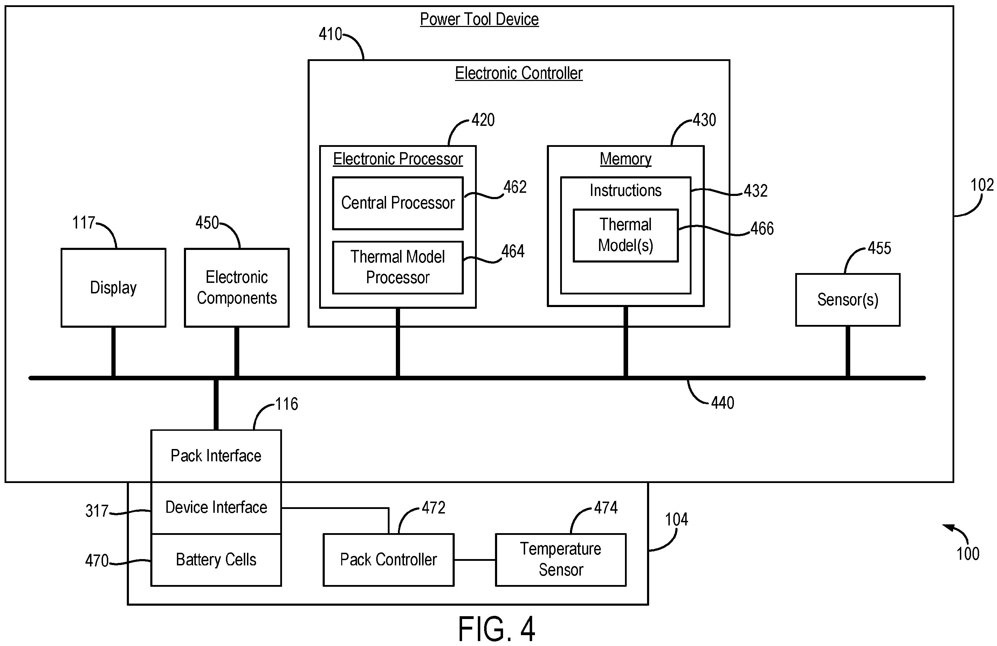

FIG. 3B illustrates an exploded view of the battery pack 304b. In the exploded view, a two-piece construction of the housing 118 is illustrated, as well as internal components including: a printed circuit board 320, (ten) battery cells 325, a cell retaining structure 330, and cell terminal connector assembly 335. The illustrated battery cells 325 are cylindrical cells including terminals 340, a cell housing or case 345, and a cylindrical "jelly roll" within the cell housing 345. The jelly roll may be formed by an insulating sheet, a thin layer of an anode material, a separator layer, and a layer of a cathode material, which is then rolled up into a cylindrical shape. The printed circuit board 320 may have mounted therein a pack controller and a temperature sensor (see, e.g., a pack controller 472 and temperature sensor 474 of FIG. 4 discussed below). In some examples, in place of or in addition to the temperature sensor on the printed circuit board 320, one or more temperature sensors may be provided at other positions of the battery pack 304b.

The battery packs 304a, 304c, and 304d of FIG. 3A, and other examples of the battery pack 104 of FIG. 1, may have a generally similar construction as the battery pack 304b, although additional or fewer rows of cylindrical cells may be present. In some examples of the battery packs 104 and 304a-d, in place of cylindrical cells, one or more prismatic cells or one or more pouch cells is provided within the battery housing 118.

FIG. 4 illustrates a block diagram of the power tool system 100 of FIG. 1 including the power tool device 102 and the battery pack 104. This diagram is similarly applicable to the examples of the power tool device 102 and the battery pack 104 illustrated in FIGS. 2 and 3.

The power tool device 102 includes the pack interface 116, an electronic controller 410 with an electronic processor 420 and memory 430, a communication bus 440, electronic components 450, and one or more sensors 455. The electronic processor 420, the memory 430, the electronic components 450, and the sensor(s) 455 may communicate over one or more control and/or data buses (for example, the device communication bus 440).

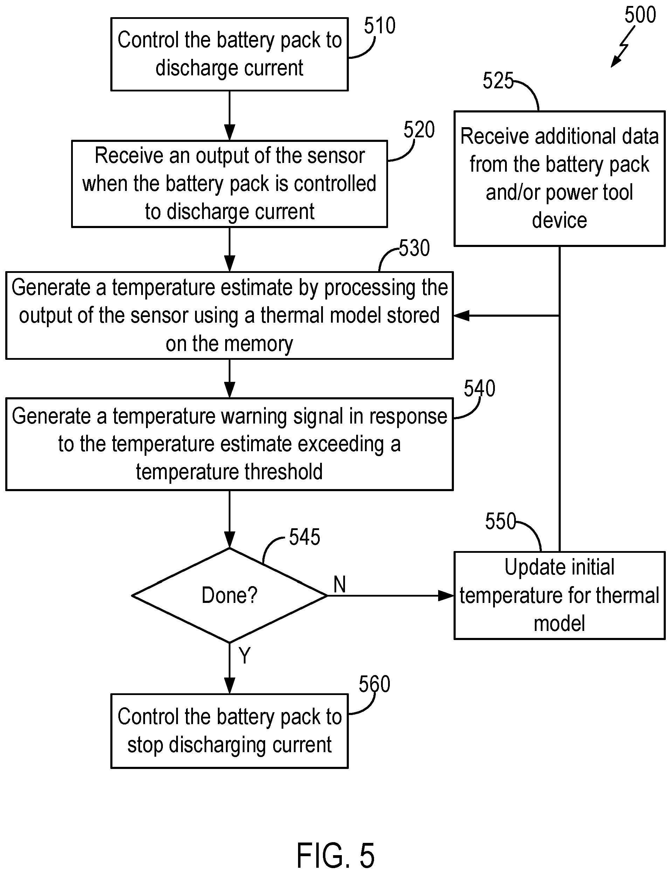

The electronic processor 420 can be configured to communicate with the memory 430 to store data and retrieve stored data. The electronic processor 420 can be configured to receive instructions and data from the memory 430 and execute, among other things, the instructions. In particular, the electronic processor 420 executes instructions stored in the memory 430. Thus, the electronic controller 410 coupled with the electronic processor 420 and the memory 430 can be configured to perform the methods described herein (e.g., the process 500 of FIG. 5).

In some examples, through execution of the instructions 432 by the electronic processor 420, the electronic controller 410 may perform one or more of the methods described herein. For example, the instructions 432 may include software executable by the electronic processor 420 to enable the electronic controller 410 to, among other things, implement the various functions of the electronic controller 410 described herein, including the temperature estimation using a thermal model and resulting control. In some examples, the electronic processor 420 includes one or more electronic processors. For example, as illustrated, the electronic processor 420 may include a central processor 462 and a thermal model processor 464. In other examples, the functions of the processors 462 and 464 are combined into a single processor or further distributed among additional processors. As illustrated, the instructions 432 include one or more thermal models 466. In some examples, one or more of the thermal models 466 is a trained machine learning model (e.g., a decision tree, a scalable distributed gradient-boosted decision tree (GBDT), a neural network, convolutional neural network (CNN), recurrent neural network (RNN)) that is executed by the electronic processor 420. In some examples, one or more of the thermal models 466 is a thermal model that includes one or more equations with variable parameters that are set based on characteristics of a type of battery pack and experimental testing thereof. In some examples, each of the one or more thermal models 466 corresponds to a specific type of battery pack that may be coupled to the power tool device 102. Each thermal model 466 may be customized for the type of battery pack to which the model corresponds, to provide accurate temperature estimates given the characteristics of the type of battery pack. For example, with reference to FIG. 3A as well, the one or more temperature models 466 may include a first thermal model corresponding to battery pack 304a, a second thermal model corresponding to battery pack 304b, a third thermal model corresponding to battery pack 304c, and a fourth thermal model corresponding to battery pack 304d. The particular number of thermal models fo the thermal models 466, and the number of types of battery packs that may couple to the power tool device 102, may vary to be greater or less than four.

In some examples, the thermal model processor 464 may execute the one or more thermal models 466 to estimate battery pack temperature, as described herein. In other words, the thermal model processor 464 may serve as a dedicated processor to execute the thermal models to estimate a temperature of the battery pack 104 coupled to the power tool device 102, as described herein. In such examples, the central processor 462 may perform other control for the power tool device 102, such as, for example, enabling and disabling a motor, output device, charging circuit, etc. In other examples, a dedicated processor (e.g., thermal model processor 464) is not provided and the central processor 462 executes the thermal models 466 to estimate a temperature of the battery pack 104.

The memory 430 can include read-only memory (ROM), random access memory (RAM), other non-transitory computer-readable media, or a combination thereof. As noted above, the memory 430 can include instructions 432 for the electronic processor 420 to execute. The instructions 432 can include software executable by the electronic processor 420 to enable the electronic controller 410 to, among other things, implement the various functions of the electronic controller 410 described herein, including the temperature estimation using a thermal model and resulting control. The software can include, for example, firmware, one or more applications, program data, filters, rules, one or more program modules, and other executable instructions.

The electronic processor 420 is also configured to store data on the memory 430 including one or more thermal models 466. For instance, a different thermal model 466 may be stored for each of multiple different battery types (e.g., batteries of different nominal voltages, different battery chemistries, etc.).

Additionally, the electronic processor 420 can also be configured to store other data on the memory 430 including information identifying the type of power tool device 102, a unique identifier for the particular power tool, user characteristics (e.g., identity, trade type, skill level), and other information relevant to operating or maintaining the power tool device 102 (e.g., received from an external source, such as an external device or pre-programed at the time of manufacture).

In some embodiments, the memory 430 may include a machine learning control that, when acted upon by the electronic processor 420, enables the electronic controller 410 to function as a machine learning controller.

In some other embodiments, the memory 430 may include an artificial intelligence control that, when acted upon by the electronic processor 420, enables the electronic controller 410 to function as an artificial intelligence controller. The artificial intelligence control may include instructions for implementing one or more artificial intelligence programs, algorithms, or models such as an expert system, a rules engine, a symbolic logic, one or more knowledge graphs, and so on.

The battery pack 104 includes the device interface 317 for selective attachment and detachment from the pack interface 116 of the power tool device 102, as also discussed with respect to FIGS. 1-3. The pack interface 116 may include one or more power terminals and, in some cases, one or more communication terminals that interface with respective power and/or communication terminals of the device interface 317 of the battery pack 104. The battery pack 104 may include one or more battery cells 470, as previously discussed. The battery pack 104 may further include a pack electronic controller (pack controller) 472, including a processor and a memory, and a temperature sensor 474. The pack controller 472 may be configured similarly to the electronic controller 410. The pack controller may be configured to regulate charging and discharging of the battery cells, and/or to communicate with the electronic controller 410 (e.g., to communicate an identity or pack type to the power tool device 102). The temperature sensor 474 may generate a signal to the pack controller 472 indicative of a temperature of the battery pack 104. The temperature of the battery pack 104 indicated by the temperature sensor 474 may be a temperature of one or more of the battery cells 470 (or particular portion of the cells), a temperature within the pack housing, a temperature of a terminal of the device interface 317. The temperature sensor 474 may be, for example, a thermistor.

The pack controller 472 may be configured to communicate the temperature of the battery pack 104 to the electronic controller 410 over the device interface 317 and pack interface 116 (e.g., via terminals thereof). In some examples, the terminals of the interfaces 116, 317 are time multiplexed and certain communications are not permitted or possible during operation of the power tool device (e.g., when driving a motor of the power tool device 102) because the terminals are being used for other purposes (e.g., communicating other information). Accordingly, in some examples, the pack controller 472 may communicate an initial temperature upon connection to the power tool device 102 and/or upon an actuation of the actuator 112 of the power tool device 102; but, thereafter, the pack controller 472 may be unable to communicate the temperature until the actuator 112 is released or operation of the power tool device 102 ceases. In other examples, such communication limitations are not present and the battery pack 104 may communicate the temperature of the battery pack 104 to the electronic controller 410 throughout operation of the power tool device 102.

The sensors 455 may be configured to sense an electrical characteristic, or parameter, of the power tool system 100 (e.g., of the battery pack 104). The sensors 455 may include, for example, one or more voltage sensors, current sensors, or a combination thereof. For example, the sensors 455 may be configured to output an analog or digital signal to the electronic controller 410 indicative of a measured electrical characteristic, or parameter, of the power tool system 100. In some examples, the sensors 455 include a current sensor configured to measure a discharge current provided by the battery pack 104 to the power tool device 102 and output a signal to the electronic controller 410 indicative of the measured discharge current (a measurement signa). Additionally or alternatively, in some examples, the sensors 455 include a voltage sensor configured to measure a voltage level of the battery pack 104 (e.g., across terminals of the battery pack 104 or other nodes along a conductive path from the battery pack 104) output a signal to the electronic controller 410 indicative of the measured voltage (a measurement signal). In some examples, the sensor(s) 455 may be selectively enabled and, when enabled, periodically output measurement signal(s) (e.g., at a sampling rate) to the electronic controller 410. In some examples, one or more of the sensor(s) 455 are provided within the battery pack 104 and the measurement signals generated by the sensors 455 are communicated to the electronic controller 410 (via the interfaces 317 and 116).

In some examples, the sensors 455 include an ambient temperature sensor configured to sense an ambient temperature in or around the housing 106 of the power tool device 102.

In some embodiments, the electronic controller 410 uses the sensor data from the sensor(s) 455 to control the power tool device 102, such as by applying the sensor data to one or more thermal models 466, which may in some instances be implemented using machine learning programs, algorithms, or models in order to generate output as control signals that control an action of the power tool device 102. For example, sensor data including current data and/or voltage data can be used as an input to a thermal model 466 to estimate the temperature of the battery pack 104 connected to the power tool device 102.

The electronic components 450 may vary depending on a type of the power tool device 102. For example, in a motorized power tool (e.g., power tool device 102a or 102c) the electronics components 450a includes a switching circuit and a motor. The switching circuit may include a one or more power switching elements (e.g., field effect transistors (FETs), bipolar junction transistors (BJTs), or the like), which may be arranged as a switch bridge. The electronic controller 410 may control the switching circuit to provide power from the battery pack 104 to the motor to drive the motor. The motor may be a permanent magnet brushless motor, a brushed motor, or another type of motor.

As another example, in a nonmotorized power tool, the electronic components 450 may include a switching circuit and an output circuit. The switching circuit may include a one or more power switching elements (e.g., field effect transistors (FETs), bipolar junction transistors (BJTs), or the like), which may be arranged as a switch bridge. The electronic controller 410 may control the switching circuit to provide power from the battery pack 104 to the output circuit to drive the output circuit. The output circuit may include a power-driven output element, for example, one or more of a work lights, a radio circuit, a speaker, a microphone, a sensor circuit, a display, among other elements. For example, with reference to FIG. 2, the output circuit may include the power-driven output element 230.

As noted with respect to FIG. 1, the power tool device 102 may further include the display 117. The electronic controller 410 may control the display 117 to display information to a user, including user notifications. Such user notifications may indicate a battery pack temperature being near to an overtemperature limit. For example, the user notifications may include one or more of an estimated number of operations until reaching an overtemperature limit, an estimated time until reaching the overtemperature limit, or an estimated temperature of the battery pack, as explained in further detail below.

Using the estimated temperature of the battery pack 104, the electronic controller 410 can avoid an overtemperature condition in the battery pack 104 by optimizing the current supplied to the power tool device 102. As one example, the electronic controller 410 can limit the current supplied to the power tool device 102 from the battery pack 104 to avoid an overtemperature condition in the battery pack while still allowing for operation of the power tool device 102, although at a reduced output capacity. Additionally or alternatively, the electronic controller 410 can allow for larger current to be pulled when the battery pack 104 is able to offer the larger current without risking creating an overtemperature condition in the battery pack 104.

As another example, the electronic controller 410 can optimize the performance of the power tool device 102 allowed by the battery pack 104. For instance, the electronic controller 410 can monitor the temperature of the battery pack 104 and, using the thermal model 466, can predict how the temperature of the battery pack 104 may change based on current or predicted operation of the power tool device 102. In this way, the electronic controller 410 may optimize the performance of the power tool device 102 such that the temperature does not increase to a point where the battery pack 104 is at risk for an overtemperature condition. Thus, as another advantage, the electronic controller 410 can estimate a future temperature based on a planned power tool device action before drawing power. Table 1 below illustrates examples of power tool devices and whether their future load is predictable, what their power usage pattern is like, and potential ways that the electronic controller 410 can avoid an overtemperature condition.

| Future Load Predictable? | Power Usage Pattern | Example | Potential Ways to Avoid Overtemperature |
|---|---|---|---|
| Yes | Discrete power usage | Nailer, crimper | Electronic controller predicts temperature for X number of applications later |
| Yes | Constant current | Blower, string trimmer, light | Electronic controller sets a maximum constant current threshold to stay under |
| No | Short application | Impact driver, drill, circular saw | Electronic controller sets an estimated real-time battery pack temperature before each trigger pull for tools to decide its action and/or behavior |
| No | Long application | Grinder, recipro-cating saw | PI-control tool output (e.g., PWM) on estimated real-time battery pack temperature |

Additionally or alternatively, the electronic controller 410 can control operation of the power tool device 102 based on the determined type of power tool battery pack 104. For example, in response to determining that the power tool battery pack 104 has an elevated output capacity, the electronic controller 410 may enable more power to be drawn from the battery pack 104 before restricting operation of the power tool device 102 to a limited operation mode (so as to limit the temperature increase, or otherwise reduce the temperature, in the battery pack 104). Similarly, in response to determining that the power tool battery pack 104 has a standard or non-elevated output capacity, the electronic controller 410 may disable or prohibit an increased discharge mode from the power tool device 102. Thus, in response in response to determining the battery pack type (and, thus, the output capacity of the battery pack), the power tool device 102 may select a particular run profile (e.g., including discharge modes that optimize power tool performance while minimizing risk for overtemperature in the battery pack 104) based on the determination.

FIG. 5 is a flowchart of a process 500 for thermal management of a power tool device. In some examples, the process 500 can be performed by the power tool device 102 (e.g., the electronic controller 410 thereof). In other examples, the process 500 may be implemented by another power tool device. Although the blocks of process 500 are illustrated in a particular order, in some examples, one or more of the blocks of process 500 are executed in parallel, in a different order, or bypassed.

In block 510, an electronic controller controls a power tool battery pack to discharge current when the power tool battery pack is coupled to a pack interface of a power tool device. For example, with reference to FIG. 1, the power tool battery pack 104 may be controlled to discharge current by the power tool device 102 in response to receipt of an actuation by the actuator 112. In some examples, the power tool battery pack 104 may be controlled to discharge current in response to being coupled to the power tool device 102 (e.g., based on a command from the power tool device 102). In some examples, the power tool battery pack 104 is controlled to discharge current by closing one or more power switching elements including, for example, one or more of (i) a discharge switch in the power tool battery pack 104 configured to make and break a connection between battery cells and battery terminals of the battery pack 104, and/or (ii) a power switching element of a switching circuit of the power tool device 102 (see, e.g., switching circuits of the electronic components 450). In some examples, for motorized power tool devices (e.g., the power tool device 102a or 102c), the electronic controller 410 may control one or more power switching elements (e.g., of the electronic components 450) to drive a motor of the power tool device (e.g., of the electronic components 450). In some examples, for nonmotorized power tool devices (e.g., the power tool device 102b), the electronic controller 410 may control one or more power switching elements (e.g., of the electronic components 450) to drive an output circuit of the power tool device (e.g., of the electronic components 450). In block 510, the electronic controller controlling the power tool battery pack 104 to discharge may be the electronic controller 410 of the power tool device 102 (see FIG. 4).

In block 520, the electronic controller receives an output of a sensor when the battery pack is controlled to discharge current. The sensor may be configured to sense an electrical parameter corresponding to a power tool battery coupled to the pack interface. The sensor may be one of the sensors 455. For example, the electronic controller (e.g., the electronic controller 410 of the power tool device 102 (see FIG. 4) or an electronic controller of the battery pack 104) may receive one or more respective output signals from the one or more sensors 455 during the discharge of current by the battery pack 104. Each output signal may be representative of a sensed electrical parameter (e.g., discharge current or discharge voltage) along a discharge path from the battery pack 104 to the power tool device 102 or a component thereof (e.g., a switching circuit, motor, output circuit, or another component of the electronic components 450). For example, a current sensor of the sensors 455 may output a current signal indicative of sensed current along the discharge path and/or a voltage sensor of the sensors 455 may output a voltage signal indicative of the sensed voltage across two points along the discharge path. The electronic controller 410 may record each output signal as a time-series of data points. For example, the time-series of data points may represent a two-dimensional data curve with time on a first axis and amplitude of the sensed electrical characteristic, or parameter, on a second axis).

The output of the sensor 455 can be recorded at a sampling rate on the order of milliseconds (e.g., every millisecond, every few milliseconds, tens of milliseconds, etc.). The output can in some implementations then be downsampled. As one example, the output can be downsampled to a sampling rate of 1/2 second. In other examples, other sampling rates can be used, such as 1/32 second, 1/16 second, 1/8 second, 1/4 second, 1 second, or other sampling rates.

In some instances, the electronic controller of the power tool device 102 (e.g., electronic controller 410) may receive data or other information from the battery pack 104, as indicated by block 525. In block 525, the electronic controller may receive such data from the battery pack 104 (e.g., from the pack controller 472, a memory, the temperature sensor 474, or other electronic component of the battery pack 104). The data received from the battery pack 104 may include the battery pack type, the initial temperature of the battery pack (e.g., the ambient temperature of the environment, an initial temperature measured by temperature sensor 474 before the power tool device 102 is activated, etc.), or other battery pack characteristics (e.g., age, usage history, etc.). The data from the battery pack 104 may be received by the electronic controller of the power tool device 102 before the power tool device is activated (e.g., prior to actuation of the actuator 112) and/or while the power tool device 102 is being operated by a user (e.g., in response to actuation of the actuator 112 or other condition).

As described above, various types of data or other information may be utilized by the electronic controller 410 to generate outputs, make determinations and predictions, and the like. The electronic controller 410 may receive, for example, usage data (e.g., usage data of the power tool device 102, and/or battery pack 104), maintenance data (e.g., maintenance data of the power tool device 102, and/or battery pack 104), environmental data, operator data, location data, and the like. The electronic controller 410 may also receive information regarding the type of battery pack 104 connected to the power tool device 102 (e.g., a 12 V battery pack, an 18 V battery pack). In some examples, the electronic controller 410 may receive a direct current internal resistance (DCIR), estimated or measured, as part of the data received in block 525. For example, the electronic controller 410 may estimate DCIR based on the output of the sensor received in block 520 using a model that generates a DCIR estimate from such output (e.g., current and/or voltage). In some examples, the current and/or voltage measurements used as input to the model may include multiple values output by the sensor(s) 455 over time (e.g., a time series of current measurements and/or a time series of voltage measurements). In such examples, the model may be a trained model (e.g., a trained neural network) trained with training data to produce an estimated DCIR from current, voltage, or both current and voltage. In other examples, the electronic controller 410 may receive a DCIR value from the battery pack 104 indicating the DCIR (or an estimate thereof), or the electronic controller 410 may access a lookup table or other data structure indexing one or more battery characteristics (e.g., type, model, age, etc.) to a DCIR value.

The electronic controller 410 receiving information from the power tool device 102, as described for some examples of block 525, may include the electronic controller 410 generating and providing this information for use (e.g., as a parameter or value) by an algorithm or software executing on the electronic controller 410. In other words, the information received by the electronic controller 410 in block 525 may not necessarily come from an external device (although it can be, e.g., from the battery pack 104); rather, the information received by the electronic controller 410 in block 525 may be received from itself (e.g., in the case of the electronic controller 410 generating this information through execution of a model or otherwise).

In block 530, the electronic controller generates a temperature estimate by processing the output of the sensor and/or the additional data received from the battery pack 104, if any, using a thermal model stored on the memory. For example, the electronic controller 410 may execute a thermal model of the thermal models 466, using the output of the sensor (e.g., the sensed electrical characteristic, or parameter) as input. To execute the thermal model, the electronic processor 420 may retrieve the thermal model from the memory 430 and execute instructions thereof. By execution of the thermal model, the thermal model may generate (e.g., provide, output, or calculate) a temperature based on the output of the sensor and the electronic controller 410 may output the temperature as the temperature estimate. The temperature estimate may be for a component of the battery pack 104 (e.g., a jelly roll, a can or container housing the jell roll, battery pack terminals, or a battery pack housing) or an ambient temperature adjacent to the battery pack (e.g., just outside the battery pack housing). In some examples, in block 530, the electronic controller 410 generates multiple of these example temperature estimates. For example, the electronic controller 410 may generate a temperature estimate for a jelly roll, for a can or container of the jelly roll, and for an ambient temperature outside of the battery pack. In other examples, the electronic controller 410 may generate a different combination of temperature estimates. Further description of an example thermal model is provided below.

In some examples, to generate the temperature estimate, the thermal model receives and processes an initial temperature along with the output of the sensor. The initial temperature may be obtained by the electronic controller 410 from various sources. In some examples, the battery pack 104 communicates the initial temperature to the electronic controller 410. For example, with reference to FIG. 4, the pack controller 472 may sense a temperature of the battery pack 104 via the temperature sensor 474 and transmit the temperature as the initial temperature, via the interfaces 317, 116 to the electronic controller 410. This transmission of the temperature from the battery pack 104 may be in response to, for example, an initial coupling of the battery pack 104 to the power tool device 102 or an actuation of the actuator 112 of the power tool device 102. In some examples, the initial temperature may be obtained from a temperature sensor 455 of the sensors 455 of the power tool device 102. In some examples, the initial temperature may be a default temperature value obtained from the memory 430 (e.g., when a temperature measurement from a temperature sensor of the battery pack 104 or power tool device 102 is not available). In some examples, to generate the temperature estimate, in addition to the initial temperature and output of the sensor, the thermal model receives and processes the DCIR for the battery pack 104 (e.g., received as described with respect to block 525).

In some examples, the one or more thermal models 466 includes just one temperature model that is generic to the various types of the battery packs 104 that may be used. In other examples, where the one or more thermal models 466 in the memory 430 includes a plurality of thermal models, the electronic controller 410 may select the thermal model from the plurality of thermal models as part of block 530. The electronic controller 410 may select the thermal model based on battery pack information of the battery pack 104 that is coupled to the power tool device 102. The battery pack information may include one or more of a type of the battery pack 104, an age of the battery pack 104, a usage history of the battery pack 104, and/or another characteristic of the battery pack 104. The battery pack information may be communicated by the pack controller 472 to the electronic controller 410 (e.g., via interfaces 317, 116) and/or inferred by the electronic controller 410 based on the electrical parameter indicated by the output of the sensor (or other electrical characteristics or parameters sensed by the one or more sensor 455). For example, the electronic controller 410 may capture an electrical signature of the battery pack 104 by controlling the battery pack 104 to discharge (e.g., momentarily), where the electrical signature is indicative of the battery pack information. Regardless of the technique to obtain the battery pack information, this information may be used to select the particular thermal model and, accordingly, this thermal model used to generate the temperature estimate may be specific or custom to the particular battery pack 104 coupled to the power tool device 102. Because the heat generation and heat transfer properties of different examples of the battery packs 104 may vary based on type, age, usage history, etc., selection of a thermal model from the one or more temperature models 466 that particularly corresponds to the battery pack 104 coupled to the power tool device 102 can improve the temperature estimate generated by the electronic controller 410. In some examples, selection of the thermal model from the one or more thermal models 466 further or alternatively includes setting parameters of the thermal model (e.g., setting coefficients of an equation of the thermal model) based on the battery pack information.

In block 540, the electronic controller generates a temperature warning signal in response to the temperature estimated by the thermal model exceeding a temperature threshold. For example, the electronic controller 410 may obtain the temperature estimated by the thermal model (the estimated temperature) and compare the estimated temperature to one or more temperature thresholds stored in the memory 430 to determine whether the estimated temperature exceeds a temperature threshold. Additionally, in response to the estimated temperature exceeding the temperature threshold, the electronic controller 410 can generate a temperature warning signal that is subsequently received by the electronic processor (e.g., electronic processor 420 or software executing thereon) and processed to control operation of the power tool device 102 to avoid a potential overtemperature condition, to provide a warning to the user (e.g., a visual warning, an auditory warning, etc.), or a combination of both.

As one example, in response to the temperature warning signal being processed by the electronic processor 420, the electronic controller 410 may limit the power supplied to the motor or other electronic components of the power tool device 102. The power may be limited to reduce the current temperature of the battery pack 104, to reduce the rate of temperature increase in the battery pack 104, or to maintain the temperature of the battery pack 104 at a particular temperature or withing a particular temperature range. To limit the power, the electronic controller 410 may enforce a maximum or reduce a duty cycle for pulse-width modulated (PWM) signals driving a motor or power switching elements of the power tool device.

In some instances, based on the estimated temperature of the battery pack 104 exceeding a threshold, the temperature warning signal may be processed by the electronic controller 410 to determine whether any operational thresholds (e.g., current drawn from the battery pack 104, motor control parameters, etc.) are to be changed to optimize performance of the power tool device 102 while avoiding an overtemperature condition in the battery pack 104. When the electronic controller 410 determines to change such operational threshold(s), the electronic controller 410 then utilizes the updated operational threshold(s) or range(s) to operate the power tool device 102.

Additionally or alternatively, in response to the temperature warning signal being processed by the electronic processor 420, the electronic controller 410 may control operation of the display 117 or another electronic component 450 of the power tool device 102 to provide a visual, auditory, or other warning or indication to the user that the battery pack 104 is at risk of reaching an overtemperature condition. For instance, the electronic controller 410 may send data to the display 117 to be presented to the user. As an example, the electronic controller 410 may send a user notification to the display 117. The user notification may include text to be displayed on the display 117, such as a text warning, a numerical indication of the risk for overtemperature (e.g., a percent score), a duration of time before an overtemperature condition will be reached (e.g., a remaining run time for the power tool device 102 at its current operation), and so on. As another example, the user notification may include a visual indication of the temperature of the battery pack 104, a risk level of reaching an overtemperature condition, or a combination of both. For instance, the user notification may include illuminating one or more LEDs to indicate the risk of reaching an overtemperature condition, such as by changing the color of one or more LEDs to indicate an overtemperature risk level. As an example, an LED may change from green (low risk), to yellow (moderate risk), to red (imminent risk).

As indicated by decision block 545, the process of estimating and monitoring the temperature of the battery pack 104 may be continuously looped while the power tool device 102 is being operated to provide real-time temperature management of the power tool device 102. For instance, while the power tool device 102 is still being operated, in addition to processing the temperature estimated by the thermal model with the electronic controller 410 to generate a temperature warning signal as described above, the estimated temperature can also be fed back into the thermal model as the current "initial temperature" of the battery pack 104, as indicated at block 550. In this way, the estimated temperature of the battery pack 104 can be continuously updated using the thermal model while the power tool device 102 is being operated. When operation of the power tool device 102 ceases (e.g., by the user no longer actuating the actuator 112), then the battery pack can be controlled to stop discharging current, as indicated at block 560. For example, the electronic controller 410 may control one or power switching elements of the battery pack 104 (e.g., a discharge enable switch) and/or the power tool device 102 (e.g., of a switch bridge driving a motor or other electronic component) to open to stop the discharge of current from the battery pack to the power tool device 102.

Although the process described above utilizes a thermal model to estimate the temperature of the battery pack 104, in other implementations noted above the battery pack 104 may include a temperature sensor 474 that is capable of directly or indirectly measuring the temperature of the battery pack 104. In these instances, the process 500 described above may be modified such that the electronic controller 410 receives the temperature measurement from the temperature sensor 474 of the battery pack 104 and generates a temperature warning signal when that temperature measurement exceeds a temperature threshold. Additionally or alternatively, the pack controller 472 of the battery pack 104 may receive the temperature measurement from the temperature sensor 474, may generate the temperature warning signal in response thereto, and may process that temperature warning signal to control operation of the battery pack 104 and/or to present a user notification via the display 117 or otherwise. Likewise, the pack controller 472 may also generate the temperature warning signal, but may send the temperature warning signal to the electronic controller 410 of the power tool device 102, such that the electronic controller 410 controls operations of the power tool device 102 and/or generates the user notification as described above.

In some instances, it is still possible that the battery pack 104 could reach an overtemperature condition. In these instances, the electronic controller 410 (and/or pack controller 472) can detect the overtemperature condition and cause operation to cease (e.g., by opening a discharge FET to prevent further discharge of current or communicating to the power tool device 102 that the battery pack 104 has reached an overtemperature condition so that the power tool device 102 stops operation/discharging current).

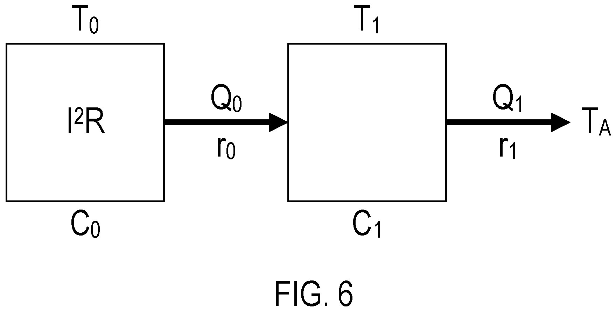

The thermal model describes the thermal dynamics of the battery pack. More particularly, as illustrated in FIG. 6, the thermal model may describe the thermal dynamics between a first component ($C_0$) and a second component ($C_1$) of the battery pack. As a non-limiting example, the first component can be the jelly roll of a battery cell and the second component can be the can, case, or battery cell housing of the battery cell. The jelly roll can include an anode material layer, a cathode material layer, and a separator layer arranged between the anode material layer and the cathode material layer. The anode material layer, cathode material layer, and separator layer can be rolled into a cylindrical shape that defines the jelly roll of the battery cell. The jelly roll is then housed within the can, case, or battery cell housing. In some implementation, this battery cell configuration results in a cylindrical battery cell. The battery pack may include one or more of such battery cells.

The thermal dynamics between first and second components of a battery can be modeled as follows:

$$\dot{Q}_0 = \frac{T_1 - T_0}{r_0} \tag{1};$$

$$\dot{Q}_1 = \frac{T_A - T_1}{r_1} \tag{2};$$

$$\frac{dT_0}{dt} = \frac{I^2 R - \dot{Q}_0}{C_0} \tag{3};$$

$$\frac{dT_1}{dt} = \frac{\dot{Q}_0 - \dot{Q}_1}{C_1} \tag{4};$$

where $I$ is the current; $R$ is the electrical resistance in the battery, such that $I^2R$ is the heating power; $C_0$ and $C_1$ are the thermal capacitance of the first component and second component of the battery, respectively; $r_0$ and $r_1$ are the thermal resistance between the first and second components of the battery, and the thermal resistance between the second component and the ambient environment, respectively; $T_0$, $T_1$, and $T_A$ are the temperatures of the first component, second component, and ambient environment, respectively; $\dot{Q}_0$ is the heat transfer between the first and second components; and $\dot{Q}_1$ is the heat transfer between the second component and the ambient environment.

In some examples, execution of the thermal model may include the electronic controller 410 solving one or more of the above Eqns. (1)-(4) to determine $T_0$, $T_1$, or $T_A$ using an initial temperature for the battery pack (e.g., a value for $T_0$, $T_1$, or $T_A$) received and/or estimated as described above, using a measured current $I$ (e.g., output by a current sensor of the sensor(s) 455), a DCIR value received and/or estimated above $as R,$ and known values for the thermal capacitances $C_0$ and $C_1$.

In some examples, the thermal model can be implemented using a machine learning model. In these instances, a trained machine learning algorithm or model (e.g., a trained neural network) may be stored on the memory 430 of the electronic controller 410 and retrieved and executed by the electronic processor 420. The trained machine learning model may be accessed with the electronic controller 410 by accessing model parameters (e.g., weights, biases, etc.) that have been optimized or otherwise estimated by training the machine learning model on training data. The electrical parameter data received from the sensor(s) 455 (e.g., current, voltage, or both current and voltage) may then be input to the machine learning model executed by the electronic controller 410 to generate the estimate of the battery pack temperature. In some examples, in addition to the electrical parameter data received from the sensor(s) 455, one or more of an initial temperature (or previously estimated temperature being feedback) or DCIR may be input to the machine learning model executed by the electronic controller 410 to generate the estimate of the battery pack temperature.

In general, such a machine learning model is trained, or has been trained, on training data in order to estimate the temperature of the battery pack from electrical parameter data, amongst other data types as described above. An artificial neural network generally includes an input layer, one or more hidden layers (or nodes), and an output layer. Typically, the input layer includes as many nodes as inputs provided to the artificial neural network. The number (and the type) of inputs provided to the artificial neural network may vary based on the particular task for the artificial neural network.

The input layer connects to one or more hidden layers. The number of hidden layers varies and may depend on the particular task for the artificial neural network. Additionally, each hidden layer may have a different number of nodes and may be connected to the next layer differently. For example, each node of the input layer may be connected to each node of the first hidden layer. The connection between each node of the input layer and each node of the first hidden layer may be assigned a weight parameter. Additionally, each node of the neural network may also be assigned a bias value. In some configurations, each node of the first hidden layer may not be connected to each node of the second hidden layer. That is, there may be some nodes of the first hidden layer that are not connected to all of the nodes of the second hidden layer. The connections between the nodes of the first hidden layers and the second hidden layers are each assigned different weight parameters. Each node of the hidden layer is generally associated with an activation function. The activation function defines how the hidden layer is to process the input received from the input layer or from a previous input or hidden layer. These activation functions may vary and be based on the type of task associated with the artificial neural network and also on the specific type of hidden layer implemented.

Each hidden layer may perform a different function. For example, some hidden layers can be convolutional hidden layers which can, in some instances, reduce the dimensionality of the inputs. Other hidden layers can perform statistical functions such as max pooling, which may reduce a group of inputs to the maximum value; an averaging layer; batch normalization; and other such functions. In some of the hidden layers each node is connected to each node of the next hidden layer, which may be referred to then as dense layers. Some neural networks including more than, for example, three hidden layers may be considered deep neural networks.

The last hidden layer in the artificial neural network is connected to the output layer. Similar to the input layer, the output layer typically has the same number of nodes as the possible outputs.

As noted above, a machine learning model can be trained on training data. Training data may include electrical parameter data acquired from battery packs in addition to temperature measurements acquired from those battery packs. The temperature measurements may be obtained from one or more components of the battery packs, such as the can, the jelly roll, or both, as described above. The machine learning model can be trained using a loss function that is based in part on Eqns. (1)-(4). For example, the loss function can be defined based on errors that satisfy Eqn. (3), Eqn. (4), or both.

It is to be understood that the disclosure is not limited in its application to the details of construction and the arrangement of components set forth in the following description or illustrated in the following drawings. The disclosure is capable of other embodiments and of being practiced or of being carried out in various ways. Also, it is to be understood that the phraseology and terminology used herein is for the purpose of description and should not be regarded as limiting. The use of "including," "comprising," or "having" and variations thereof herein is meant to encompass the items listed thereafter and equivalents thereof as well as additional items. Unless specified or limited otherwise, the terms "mounted," "connected," "supported," and "coupled" and variations thereof are used broadly and encompass both direct and indirect mountings, connections, supports, and couplings. Further, "connected" and "coupled" are not restricted to physical or mechanical connections or couplings.

As used herein, unless otherwise limited or defined, discussion of particular directions is provided by example only, with regard to particular embodiments or relevant illustrations. For example, discussion of "top," "front," or "back" features is generally intended as a description only of the orientation of such features relative to a reference frame of a particular example or illustration. Correspondingly, for example, a "top" feature may sometimes be disposed below a "bottom" feature (and so on), in some arrangements or embodiments. Further, references to particular rotational or other movements (e.g., counterclockwise rotation) is generally intended as a description only of movement relative a reference frame of a particular example of illustration.

In some embodiments, including computerized implementations of methods according to the disclosure, can be implemented as a system, method, apparatus, or article of manufacture using standard programming or engineering techniques to produce software, firmware, hardware, or any combination thereof to control a processor device (e.g., a serial or parallel processor chip, a single- or multi-core chip, a microprocessor, a field programmable gate array, any variety of combinations of a control unit, arithmetic logic unit, and processor register, and so on), a computer (e.g., a processor device operatively coupled to a memory), or another electronically operated controller to implement aspects detailed herein. Accordingly, for example, embodiments of the disclosure can be implemented as a set of instructions, tangibly embodied on a non-transitory computer-readable media, such that a processor device can implement the instructions based upon reading the instructions from the computer-readable media. Some embodiments of the disclosure can include (or utilize) a control device such as an automation device, a computer including various computer hardware, software, firmware, and so on, consistent with the discussion below. As specific examples, a control device can include a processor, a microcontroller, a field-programmable gate array, a programmable logic controller, logic gates etc., and other typical components that are known in the art for implementation of appropriate functionality (e.g., memory, communication systems, power sources, user interfaces and other inputs, etc.). Also, functions performed by multiple components may be consolidated and performed by a single component. Similarly, the functions described herein as being performed by one component may be performed by multiple components in a distributed manner. Additionally, a component described as performing particular functionality may also perform additional functionality not described herein. For example, a device or structure that is "configured" in a certain way is configured in at least that way, but may also be configured in ways that are not listed.

The term "article of manufacture" as used herein is intended to encompass a computer program accessible from any computer-readable device, carrier (e.g., non-transitory signals), or media (e.g., non-transitory media). For example, computer-readable media can include but are not limited to magnetic storage devices (e.g., hard disk, floppy disk, magnetic strips, and so on), optical disks (e.g., compact disk (CD), digital versatile disk (DVD), and so on), smart cards, and flash memory devices (e.g., card, stick, and so on). Additionally it should be appreciated that a carrier wave can be employed to carry computer-readable electronic data such as those used in transmitting and receiving electronic mail or in accessing a network such as the Internet or a local area network (LAN). Those skilled in the art will recognize that many modifications may be made to these configurations without departing from the scope or spirit of the claimed subject matter.

Certain operations of methods according to the disclosure, or of systems executing those methods, may be represented schematically in the figures or otherwise discussed herein. Unless otherwise specified or limited, representation in the figures of particular operations in particular spatial order may not necessarily require those operations to be executed in a particular sequence corresponding to the particular spatial order. Correspondingly, certain operations represented in the figures, or otherwise disclosed herein, can be executed in different orders than are expressly illustrated or described, as appropriate for particular embodiments of the disclosure. Further, in some embodiments, certain operations can be executed in parallel, including by dedicated parallel processing devices, or separate computing devices configured to interoperate as part of a large system.

As used herein in the context of computer implementation, unless otherwise specified or limited, the terms "component," "system," "module," and the like are intended to encompass part or all of computer-related systems that include hardware, software, a combination of hardware and software, or software in execution. For example, a component may be, but is not limited to being, a processor device, a process being executed (or executable) by a processor device, an object, an executable, a thread of execution, a computer program, or a computer. By way of illustration, both an application running on a computer and the computer can be a component. One or more components (or system, module, and so on) may reside within a process or thread of execution, may be localized on one computer, may be distributed between two or more computers or other processor devices, or may be included within another component (or system, module, and so on).

In some implementations, devices or systems disclosed herein can be utilized or installed using methods embodying aspects of the disclosure. Correspondingly, description herein of particular features, capabilities, or intended purposes of a device or system is generally intended to inherently include disclosure of a method of using such features for the intended purposes, a method of implementing such capabilities, and a method of installing disclosed (or otherwise known) components to support these purposes or capabilities. Similarly, unless otherwise indicated or limited, discussion herein of any method of manufacturing or using a particular device or system, including installing the device or system, is intended to inherently include disclosure, as embodiments of the disclosure, of the utilized features and implemented capabilities of such device or system.

Features which are described in the context of separate embodiments may also be provided in combination in a single embodiment. Conversely, various features which are, for brevity, described in the context of a single embodiment, may also be provided separately or in any suitable sub-combination. The applicant hereby gives notice that new claims may be formulated to such features and/or combinations of such features during the prosecution of the present application or of any further application derived therefrom. Features of the components and systems described may be incorporated into/used in corresponding methods and vice versa.

As used herein, unless otherwise defined or limited, ordinal numbers are used herein for convenience of reference based generally on the order in which particular components are presented for the relevant part of the disclosure. In this regard, for example, designations such as "first," "second," etc., generally indicate only the order in which the relevant component is introduced for discussion and generally do not indicate or require a particular spatial arrangement, functional or structural primacy or order.

As used herein, unless otherwise defined or limited, directional terms are used for convenience of reference for discussion of particular figures or examples. For example, references to downward (or other) directions or top (or other) positions may be used to discuss aspects of a particular example or figure, but do not necessarily require similar orientation or geometry in all installations or configurations.

As used herein, unless otherwise defined or limited, the phase "and/or" used with two or more items is intended to cover the items individually and the items together. For example, a device having "a and/or b" is intended to cover: a device having a (but not b); a device having b (but not a); and a device having both a and b.

The present disclosure has described one or more preferred embodiments, and it should be appreciated that many equivalents, alternatives, variations, and modifications, aside from those expressly stated, are possible and within the scope of the invention.

**Claims**

1. A power tool system comprising:

   a power tool comprising:

   a power tool housing;
   a motor housed within the power tool housing;
   a pack interface coupled to the power tool housing, the pack interface configured to receive a power tool battery pack having a corresponding tool interface;

   a sensor configured to sense an electrical parameter corresponding to a power tool battery pack coupled to the pack interface; and
   an electronic controller of the power tool, the electronic controller including an electronic processor and a memory, the electronic controller configured to:

   control the power tool battery pack to discharge current;
   receive an output of the sensor when the power tool battery pack is controlled to discharge current;
   generate a temperature estimate by processing the output of the sensor using a thermal model stored on the memory; and
   generate a temperature warning signal in response to the temperature estimate exceeding a temperature threshold.

2. The power tool system of claim 1, wherein the electronic controller is further configured to:
   limit power to the motor in response to the temperature warning signal.

3. The power tool system of claim 1, wherein the electronic controller is further configured to:

   generate, in response to the temperature warning signal, a user notification indicative of a power tool battery pack temperature being near to an overtemperature limit,
   wherein the user notification indicates at least one selected from a group of an estimated number of operations until reaching the overtemperature limit, an estimated time until reaching the overtemperature limit, or an estimated temperature of the power tool battery pack.

4. The power tool system of claim 1, wherein the temperature estimate is a first temperature estimate and wherein the electronic controller is further configured to:
   generate a second temperature estimate by processing the output of the sensor using the thermal model stored on the memory, wherein the first temperature estimate indicates a temperature of a first component of the power tool battery pack and the second temperature estimate indicates a temperature of a second component of the power tool battery pack.

5. The power tool system of claim 4, wherein the power tool battery pack includes a terminal of the tool interface, a pack housing, and a cylindrical cell including a jelly roll and a can housing, and

   wherein the first component is selected from a group of the jelly roll, the can housing, the terminal, and the pack, and
   the second component is another component selected from the group of the jelly roll, the can housing, the terminal, and the pack housing.

6. The power tool system of claim 1, wherein the memory stores a plurality of thermal models and the electronic controller is configured to select the thermal model from the plurality of thermal models based on a type of the power tool battery pack.

7. The power tool system of claim 6, wherein the electronic controller is configured to:

determine the type of the power tool battery pack based on the output of the sensor or a communication from the power tool battery pack that includes a pack identifier; and

select the thermal model from the plurality of thermal models as the thermal model associated with the type of power tool battery pack.

8. The power tool system of claim 1, wherein the electronic controller is configured to determine an initial temperature of the power tool battery pack and input the initial temperature of the power tool battery pack as an additional input to the thermal model.

9. The power tool system of claim 1, wherein the electrical parameter comprises at least one selected from a group of a current supplied from the power tool battery pack or a voltage of the power tool battery pack.

10. The power tool system of claim 1, wherein the output of the sensor comprises a time series of measurements of the electrical parameter.

11. A method of controlling operation of a power tool, the method comprising:

controlling, by an electronic controller, a power tool battery pack to discharge current when the power tool battery pack is coupled to a pack interface of a power tool;

measuring an electrical output of the power tool battery pack based on an output of a sensor when the power tool battery pack is controlled to discharge current;

estimating, by the electronic controller, a temperature of the power tool battery pack from the electrical output using a thermal model; and

generating, with the electronic controller, a temperature warning signal in response to the temperature of the power tool battery pack exceeding a temperature threshold.

12. The method of claim 11, further comprising controlling, by the electronic controller in response to the temperature warning signal, operation of the power tool to maintain the temperature of the power tool battery pack below a temperature threshold.

13. The method of claim 12, wherein controlling the operation of the power tool comprises at least one of:

limiting power to a motor of the power tool in response to the temperature warning signal; or

reducing a maximum current limit of the power tool to a reduced value and controlling the power tool using the maximum current limit set at the reduced value.

14. The method of claim 11, further comprising generating, by the electronic controller in response to the temperature warning signal, generating a user notification indicative of a battery pack temperature being near to an overtemperature limit.

15. The method of claim 14, wherein the user notification indicates at least one selected from a group of an estimated number of operations until reaching the overtemperature limit, an estimated time until reaching the overtemperature limit, or an estimated temperature of the power tool battery pack.

100

106

108

102

117

114

112

110

116

120

122

104

118

FIG. 1

102a

210a

206a

208a

216a

212a

214a

102b

230

212b

206b

208b

216b

212c

210c

102c

216c

206c

208c

FIG. 2

FIG. 3A

304b

122

120

317

118

317

320

335

325

345

330

345

340

118

FIG. 3B

FIG. 4

EP 4 606 526 A1

510

Control the battery pack to
discharge current

500

525

Receive additional data
from the battery pack
and/or power tool
device

520

Receive an output of the sensor
when the battery pack is controlled
to discharge current

530

Generate a temperature estimate by processing the
output of the sensor using a thermal model stored
on the memory

540

Generate a temperature warning signal in response
to the temperature estimate exceeding a
temperature threshold

545

Done?

N

550

Update initial
temperature for thermal
model

Y

560

Control the battery pack to
stop discharging current

FIG. 5

FIG. 6

Europäisches
Patentamt

European
Patent Office

Office européen
des brevets

# EUROPEAN SEARCH REPORT

**Application Number**

EP 25 15 9383

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2022/093932 A1 (MILWAUKEE ELECTRIC TOOL CORP [US]) 5 May 2022 (2022-05-05) * the whole document * | 1-6,9, 11,13,14 | INV. B25F5/00 H01M10/6235 H01M10/48 |
| A | CN 117 110 914 A (NINGDE CONTEMPORARY AMPEREX TECH CO LTD) 24 November 2023 (2023-11-24) * the whole document * | 1-15 | |
| A | US 2024/053403 A1 (WANG ZHONG [US] ET AL) 15 February 2024 (2024-02-15) * the whole document * | 1-15 | |

**TECHNICAL FIELDS SEARCHED (IPC)**

B25F
H01M
B25H

The present search report has been drawn up for all claims

| Place of search | Date of completion of the search | Examiner |
|---|---|---|
| Munich | 20 June 2025 | Humbert, Thomas |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 25 15 9383

This annex lists the patent family members relating to the patent documents cited in the above-mentioned European search report.
The members are as contained in the European Patent Office EDP file on
The European Patent Office is in no way liable for these particulars which are merely given for the purpose of information.

20-06-2025

| Patent document cited in search report | Publication date | Patent family member(s) | | Publication date |
|---|---|---|---|---|
| WO 2022093932 A1 | 05-05-2022 | EP | 4237203 A1 | 06-09-2023 |
| | | US | 2022137147 A1 | 05-05-2022 |
| | | US | 2025147110 A1 | 08-05-2025 |
| | | WO | 2022093932 A1 | 05-05-2022 |
| CN 117110914 A | 24-11-2023 | NONE | | |
| US 2024053403 A1 | 15-02-2024 | EP | 4569588 A2 | 18-06-2025 |
| | | KR | 20250049334 A | 11-04-2025 |
| | | US | 2024053403 A1 | 15-02-2024 |
| | | WO | 2024035826 A2 | 15-02-2024 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 63557026